# EUROPÄISCHE PATENTSCHRIFT

(11) **EP 4 551 371 B1**
(45) Veröffentlichungstag und Bekanntmachung des Hinweises auf die Patenterteilung: **17.06.2026**
(21) Anmeldenummer: 23735032.7
(22) Anmeldetag: 26.06.2023
(51) Int. Cl.: B27L 7/00, B27L 7/06

(54) **VORRICHTUNG ZUM SPALTEN VON LANGHOLZ**
DEVICE FOR SPLITTING LONG WOOD
DISPOSITIF POUR FENDRE LE BOIS LONG

(30) Priorität: 05.07.2022 AT 504902022
(43) Veröffentlichungstag der Anmeldung: 14.05.2025
(73) Patentinhaber: HALB PUMPEN GMBH, 8384 Minihof-Liebau (AT)
(72) Erfinder: HALB, Wolfgang, 8384 Minihof-Liebau (AT)
(74) Vertreter: Beer & Partner Patentanwälte KG
(86) Internationale Anmeldenummer: PCT/EP2023/067265
(87) Internationale Veröffentlichungsnummer: WO 2024/008497

(56) Entgegenhaltungen:
- AT-A2- 501 125
- DE-A1- 102005 058 085
- DE-A1- 102007 055 326
- US-A- 5 320 149
- US-A1- 2007 033 839

## Beschreibung

Die Erfindung betrifft eine Vorrichtung zum Spalten von Langholz, die eine Verbindungseinrichtung zum Verbinden der Vorrichtung mit einem Nutzfahrzeug, einen an der Verbindungseinrichtung angeordneten Zangenarm und eine am Zangenarm, vorzugsweise an dessen distalem Ende, angeordnete Spaltzange mit wenigstens zwei aufeinander zu bewegbaren, mit Schneidkanten bzw. Schneidkeilen versehenen Klauen aufweist, wobei die Spaltzange anhebbar und absenkbar ist. Eine solche Vorrichtung ist aus dem Dokument AT 501 125 A2 bekannt.

Spaltzangen werden in der Forstwirtschaft primär dafür eingesetzt, gefällte Baumstämme - sogenanntes Langholz - der Länge nach zu spalten, um passende Holzstücke für die Bestückung eines Holzhäckslers zu erhalten. Sie können aber auch ganz allgemein zur Zerkleinerung größerer Holzstücke bzw. Holzabschnitte oder Wurzelstöcke genutzt werden.

Aus dem Stand der Technik sind forstliche Nutzfahrzeuge bekannt, die zum Spalten von Langholz eingesetzt werden und zu diesem Zweck eine an einem Kranträger montierte und in der Regel mit Hilfe eines hydraulischen Antriebs schließbare und wieder aufmachbare Spaltzange aufweisen. Im Einsatz greifen die mit Schneidkanten bzw. Schneidkeilen versehenen Klauen der Spaltzange seitlich an einem Holzstück, z.B. einem Baumstamm, an und schneiden beim Schließen der Spaltzange von der Seite her immer tiefer in das Holz ein, wodurch die in Längsrichtung verlaufenden Holzfasern auseinandergerissen werden und das Holz gespalten wird.

Damit sich der im Bereich der Klauen erzeugte Spalt in Längsrichtung durch das Langholz fortsetzen kann und das Holzstück entzweit, wird bei herkömmlichen Nutzfahrzeugen, die zum Spalten von Langholz eingesetzt werden, die Spaltzange mit Hilfe eines Kranträgers angehoben. Dadurch wird der oberhalb der Klauen angeordnete und von der Spaltzange umschlossene Teil des Holzstücks vom unteren Teil des Holzstücks nach oben hin weg bewegt. Damit der untere Teil des Holzstücks nicht zusammen mit dem oberen Teil hochgehoben wird und der Spalt geöffnet werden kann, wird der untere Teil in der Regel aktiv mit Hilfe einer Greifvorrichtung am Boden oder von unten her festgehalten.

Derartige Vorrichtungen (Fahrzeuge, Systeme, Zangen, etc.) zum Spalten von Langholz sind beispielsweise aus AT 504 125 A4, DE 10 2006 031 128 A1, AT 521 817 A1, DE 20 2011 050 774 U1 und DE 10 2007 055 326 A1 bekannt. Eine Greifzange zum Verrücken von Schnittholz, wie beispielsweise abgesägten Baumstämmen, ist beispielsweise aus EP 1 852 013 A1 bekannt. Weitere Vorrichtungen zum Spalten von Langholz, die sich jedoch eines Spaltkeils oder einer Spaltklinge bedienen, sind beispielsweise aus AT 501 125 A2, DE 10 2005 058 085 A1 und US 5,320,149 A bekannt. Eine Vorrichtung zum Entfernen und Zerteilen eines Wurzelstockes ist beispielsweise aus US 2007/0033839 A1 bekannt.

Nachteilig bei bekannten Vorrichtungen zum Spalten von Langholz ist, dass diese beim Aufweiten des Spalts die Spaltzange nach oben weg abheben, wodurch ein leistungsstarker und komplexer Kranaufbau sowie eine meist kompliziert gestaltete Festhalteeinrichtung zum Festhalten des unteren Teils des Langholzes benötigt werden.

Dies schränkt überdies die Anzahl der Nutzfahrzeuge ein, die zum Spalten von Langholz eingesetzt werden können, da das Nutzfahrzeug einen leistungsstarken Kranaufbau aufweisen oder zumindest damit ausstattbar sein muss.

Der Erfindung liegt die Aufgabe zu Grunde, eine Vorrichtung zum Spalten von Langholz der eingangs genannten Gattung zur Verfügung zu stellen, die die Nachteile des Standes der Technik nicht aufweist. Insbesondere soll eine einfache und zusammen mit einer Vielzahl von Nutzfahrzeugen einsetzbare Vorrichtung zum Spalten von Langholz bereitgestellt werden.

Gelöst wird diese Aufgabe erfindungsgemäß mit einer Vorrichtung, die die Merkmale von Anspruch 1 aufweist.

Bevorzugte und vorteilhafte Ausführungsformen der Erfindung sind Gegenstand der Unteransprüche.

Erfindungsgemäß ist vorgesehen, dass die Vorrichtung zusätzlich einen Niederhalter zum Niederhalten von Langholz aufweist, der eine Längserstreckung und ein nach unten gerichtetes freies Ende aufweist, an dem der Niederhalter wenigstens einen Dorn, eine Kralle oder einen Zahn zum Niederhalten von Langholz aufweist und das mit Hilfe eines Antriebes anhebbar und absenkbar ist.

Die erfindungsgemäße Vorrichtung ist derart ausgestaltet, dass das freie Ende des Niederhalters während des Vorgangs des Spaltens des Langholzes absenkbar bzw. anhebbar ist. Im Rahmen der Erfindung ist das freie Ende des Niederhalters unabhängig von der Spaltzange anhebbar und absenkbar, sodass es beispielsweise abgesenkt werden kann, während die Spaltzange auf einer Höhe verharrt oder angehoben wird. Ein freies Ende eines Niederhalters, das beim Spalten des Holzes in einer abgesenkten oder angehobenen Position verharrt, ist nicht anhebbar und absenkbar im Sinne der Erfindung.

Das Anheben und Absenken des Niederhalters erfolgt erfindungsgemäß mit Hilfe wenigstens eines Antriebes, wobei dieser Antrieb ein elektrischer, hydraulischer, pneumatischer oder anders ausgeführter Antrieb sein kann.

Um mit der erfindungsgemäßen Vorrichtung ein Stück Langholz, wie einen Baumstamm, der Länge nach zur Gänze zu spalten, wird das Langholz - vorzugsweise an einem Ende - mit der Spaltzange ergriffen und im Angriffsbereich der Spaltzange lokal gespalten. Anschließend daran wird das nach unten gerichtete freie Ende des Niederhalters, das vor, während oder nach dem Einsatz der Spaltzange an das Langholz - vorzugsweise ebenfalls an dessen Ende - angesetzt wird, abgesenkt. Der Niederhalter greift dabei an jenem Teil des Langholzes an, das unterhalb des durch die Spaltzange erzeugten lokalen Spalts liegt. Durch das Absenken des freien Endes des Niederhalters, wird der untere Teil des Langholzes nach unten gedrückt und der lokal im Angriffsbereich der Spaltzange erzeugte Spalt weiter geöffnet, sodass sich der Spalt über die gesamte Länge des Langholzes fortsetzt und das Langholz schließlich zur Gänze spaltet.

Anders als bei herkömmlichen Nutzfahrzeugen, die zum Spalten von Langholz vorgesehen sind, muss die Spaltzange der erfindungsgemäßen Vorrichtung beim Spalten des Langholzes nicht zwingend nach oben angehoben werden. Sie kann auf einer Höhe gehalten werden, wodurch ein wesentlich einfacherer Aufbau der Halterung der Spaltzange möglich ist als bei herkömmlichen Nutzfahrzeugen, die zum Spalten von Langholz vorgesehen sind.

Es sind jedoch auch Ausführungsformen der erfindungsgemäßen Vorrichtung denkbar, bei denen die Spaltzange beim Spalten nach oben bewegt wird. Vorteilhaft an diesen Ausführungsformen ist, dass das Spalten des Langholzes durch das Zusammenspiel aus Absenken des freien Endes des Niederhalters und Anheben der Spaltzange wesentlich schneller (prinzipiell sogar doppelt so schnell) erfolgen kann, als bei herkömmlichen Nutzfahrzeugen, die zum Spalten von Langholz vorgesehen sind.

Besonders vorteilhaft an der erfindungsgemäßen Vorrichtung ist auch, dass diese über die Verbindungseinrichtung mit einem Nutzfahrzeug verbindbar ist. Als Nutzfahrzeug kann beispielsweise ein Traktor verwendet werden. Somit kann auch in kleineren land- oder forstwirtschaftlichen Betrieben auf kostengünstige Weise eine Möglichkeit zum Spalten von Langholz bereitgestellt werden, ohne dass ein eigens darauf spezialisiertes Fahrzeug angeschafft werden muss. Weiters kann die erfindungsgemäße Vorrichtung verhältnismäßig einfach und schnell an das Nutzfahrzeug angeschlossen bzw. von diesem abgekoppelt werden, ohne dass am Nutzfahrzeug selbst größere Umbauten notwendig sind.

Als nach unten gerichtetes freies Ende wird im Rahmen der Erfindung auch ein freies Ende angesehen, von dem nur ein Teil, Element, Abschnitt, etc. nach unten gerichtet ist.

Insbesondere ist im Rahmen der Erfindung eine Ausführungsform bevorzugt, bei der der Zangenarm in einer Vertikalebene verschwenkbar ist. Dies kann insbesondere erreicht werden, indem der Zangenarm an seinem proximalen Ende schwenkbar mit der Verbindungseinrichtung verbunden ist und/oder indem die Verbindungseinrichtung schwenkbar mit dem Nutzfahrzeug verbindbar ist. Das Verschwenken des Zangenarms ermöglicht ein einfaches und effektives Absenken bzw. Anheben der Spaltzange, sodass dieses an ein am Boden liegendes Langholz herangeführt werden kann.

Möglich, wenn auch nicht bevorzugt, sind Ausführungsformen, bei denen der Zangenarm nicht verschwenkbar ist, sondern die Spaltzange im Wesentlichen in der Vertikale anhebbar und absenkbar ist. Dies kann beispielsweise durch eine vertikale Verschiebung oder eine vertikale Verlängerung des Zangenarms erreicht werden.

Erfindungsgemäß weist der Niederhalter an seinem freien Ende wenigstens einen Dorn, eine Kralle oder einen Zahn zum Niederhalten von Langholz auf. Im Wesentlichen weist der Niederhalter an seinem freien Ende ein Element auf, das geeignet ist, an einem Langholz anzugreifen bzw. in ein Langholz einzugreifen. Ein derartiges Angriffselement weist insbesondere wenigstens eine Spitze und/oder wenigstens eine scharfe Kante auf, mit der es beim Angreifen bzw. Eingreifen in das Holz eindringen kann.

Im Rahmen der Erfindung kann der Niederhalter an der Verbindungseinrichtung und/oder am Zangenarm angeordnet sein. Der Niederhalter kann dabei direkt oder indirekt, z.B. über eine Lagerung, ein Befestigungselement, eine Befestigungsvorrichtung, eine automatische Bewegungsvorrichtung oder Ähnliches, an der Verbindungseinrichtung und/oder am Zangenarm angeordnet sein.

Bevorzugt ist es, wenn der Niederhalter ein in Richtung seiner Längserstreckung verlaufendes, längliches Trägerelement aufweist. Bei derartigen Ausführungsformen besteht der Niederhalter im Wesentlichen aus dem Trägerelement, das die Form eines länglichen Trägers mit einem kreisförmigen, rechteckförmigen, I-förmigen, U-förmigen oder andersförmigen Querschnitt aufweist. Derartige Niederhalter sind einfach herzustellen. Weiters lässt sich das freie Ende eines derartigen Niederhalters auf einfache Art und Weise absenken und anheben.

In einer bevorzugten Ausführungsform verläuft die Längserstreckung des Niederhalters in einem spitzen Winkel zur Vertikale. Derartige Niederhalter üben mit ihrem freien Ende beim Spalten eine schräg nach unten gerichtete Kraft auf das Langholz aus, wodurch verhindert wird, dass der Niederhalter beim Spalten des Langholzes von diesem abrutscht.

Insbesondere kann vorgesehen sein, dass der Niederhalter um eine im Wesentlichen horizontal verlaufende Schwenkachse verschwenkbar ist. Bei derartigen Niederhaltern ist der Winkel, den die Längserstreckung des Niederhalters mit der Vertikale einschließt, veränderbar. Dies ermöglicht eine effektive Handhabung unterschiedlich großer bzw. geformter Langholzstücke, da der Niederhalter in unterschiedlichen Winkeln an dem Langholz angreifen kann bzw. an das Langholz herangeführt werden kann.

In einer vorteilhaften Ausführungsform ist das freie Ende des Niederhalters anhebbar und absenkbar, indem der Niederhalter, vorzugsweise ein längliches Trägerelement des Niederhalters, in der Vorrichtung in Richtung der Längserstreckung des Niederhalters verschiebbar gelagert ist. Der Niederhalter bzw. ggf. das Trägerelement des Niederhalters kann beispielsweise eine Zahnstange aufweisen und über ein in einer Lagerungseinrichtung vorgesehenes, in die Zahnstange eingreifendes und durch einen Motor angetriebenes Ritzel in Richtung seiner Längserstreckung verschoben werden. Bei derartigen Ausführungsformen kann besonders einfach und effektiv eine hohe Kraft über das freie Ende des Niederhalters auf das Langholz ausgeübt werden.

In einer weiteren vorteilhaften Ausführungsform ist das freie Ende des Niederhalters anhebbar und absenkbar, indem der Niederhalter, vorzugsweise ein längliches Trägerelement des Niederhalters, in Richtung der Längserstreckung des Niederhalters längenveränderbar ist. Dies ist beispielsweise möglich, indem der Niederhalter bzw. ggf. das Trägerelement teleskopartig einfahrbare und ausfahrbare Segmente aufweist. Beispielsweise können diese Segmente wenigstens einen Außenträger und wenigstens einen darin ein- und ausfahrbaren Innenträger umfassen. Eine derartige Ausführungsform hat den Vorteil, dass die Vorrichtung nach oben hin (insbesondere bei angehobenem freiem Ende des Niederhalters) keinen erhöhten Platzbedarf hat bzw. überhaupt kompakter ausgeführt sein kann, sodass das Spalten von Langholz auch in Gebäuden wie Garagen, Ställen, Stadeln oder Hallen stattfinden kann.

Im Rahmen der Erfindung sind auch Ausführungsformen möglich, bei denen das freie Ende des Niederhalters aufgrund einer Kombination der vorstehenden Ausführungsformen absenkbar und anhebbar ist. Beispielsweise kann ein bestimmter Abschnitt des Niederhalters in einer Lagereinrichtung verschiebbar gelagert und ein weiterer Abschnitt, der zwischen dem verschiebbar gelagerten Abschnitt und dem freien Ende angeordnet ist, längenveränderbar sein. Bei derartigen Vorrichtungen lässt sich das freie Ende besonders hoch anheben bzw. tief absenken.

Im Rahmen der Erfindung kann vorgesehen sein, dass die Verbindungseinrichtung wenigstens drei Verbindungselemente zum Verbinden mit dem Nutzfahrzeug aufweist, sodass sie an wenigstens drei Stellen mit einem Nutzfahrzeug verbindbar ist. Möglich sind im Rahmen der Erfindung auch Verbindungseinrichtungen mit mehr als drei, beispielsweise vier, fünf oder mehr als fünf, Verbindungselementen, jedoch reichen drei Verbindungselemente in der Regel aus, um eine stabile und/oder funktionable Verbindung der erfindungsgemäßen Vorrichtung mit einem Nutzfahrzeug herstellen zu können.

Bei einer Verbindungseinrichtung mit drei Verbindungselementen können zwei der Verbindungselemente Anschlüsse für bzw. Bestandteile von Schwenkverbindungen sein, durch die die Verbindungseinrichtung um eine im Wesentlichen horizontal verlaufende Schwenkachse schwenkbar mit dem Nutzfahrzeug verbindbar bzw. an diesem anordenbar sind. Das dritte Verbindungselement kann ein Anschluss für bzw. Bestandteil von einer Verschiebungseinrichtung, wie einem hydraulischen Hubkolben, sein, durch die die Verbindungseinrichtung zumindest bereichsweise vom Nutzfahrzeug weg und zum Nutzfahrzeug hin bewegt werden kann. Eine derartige Verbindungseinrichtung ermöglicht das Verschwenken der gesamten Vorrichtung um eine horizontale Achse, sodass beispielsweise die Spaltzange am Zangenarm abgesenkt und angehoben werden kann.

Im Rahmen der Erfindung sind auch andere Kombinationen bzw. Anordnungen von Verbindungseinrichtungen denkbar. Beispielsweise können mehrere Verschiebungseinrichtungen oder kann nur eine Schwenkverbindung (z.B. mit einer horizontal verlaufenden Welle) vorgesehen sein. Weiters kann/können die Schwenkverbindung/en unten und die Verschiebungseinrichtung/en oben oder vice versa angeordnet sein.

An der Verbindungseinrichtung kann/können wenigstens eine Stütze, insbesondere zwei oder mehr Stützen, angeordnet sein, die absenkbar und anhebbar ist/sind. Eine derartige Stütze bzw. derartige Stützen können beispielsweise beim Spalten abgesenkt werden, bis sie am Untergrund aufsteht/aufstehen. Dadurch stützt sich die Vorrichtung bzw. das die Vorrichtung tragende Nutzfahrzeug beim Spalten am Untergrund ab. Die Stütze/n kann/können aber auch beim Ergreifen bzw. Anheben des Langholzes und/oder beim Abstellen der vom Nutzfahrzeug abmontierten Vorrichtung ausgefahren werden, um die Vorrichtung abzustützen.

Die Erfindung betrifft auch ein Fahrzeug zum Spalten von Langholz, das ein Nutzfahrzeug mit einer damit verbundenen Vorrichtung gemäß einer der vorangehenden Ausführungsformen ist.

Als mit der Vorrichtung verbindbares bzw. die Vorrichtung aufweisendes Nutzfahrzeug kommt im Rahmen der Erfindung insbesondere ein Traktor, aber auch ein Lastwagen, eine Forstraupe, ein Kran, ein Bagger, usw. in Frage. Die Vorrichtung kann lösbar oder untrennbar mit dem Nutzfahrzeug verbunden, d.h. auch integraler Bestandteil des Nutzfahrzeuges, sein.

Im Rahmen der Erfindung kann das mit der Vorrichtung verbindbare bzw. die Vorrichtung aufweisende Nutzfahrzeug auch ein Anhänger sein. Ebenso ist es möglich, dass die Vorrichtung losgelöst von einem Nutzfahrzeug, z.B. daneben aufgestellt, verwendet wird, d.h. die Verbindungseinrichtung beim Spalten nicht mit dem Nutzfahrzeug verbunden ist (wobei Antriebe, wie beispielsweise Hydraulikantriebe, der Vorrichtung während des Spaltens jedoch mit dem Nutzfahrzeug über Leitungen verbunden sein können).

Weitere Einzelheiten, Merkmale und Vorteile der Erfindung ergeben sich aus der nachstehenden Beschreibung unter Bezugnahme auf die angeschlossenen Zeichnungen, in welchen bevorzugte Ausführungsformen dargestellt sind. Es zeigt:
- Fig. 1: eine isometrische Ansicht einer erfindungsgemäßen Vorrichtung zum Spalten von Langholz,
- Fig. 2: eine Seitenansicht der erfindungsgemäßen Vorrichtung, bei der die Spaltzange bereits in ein Langholz eingreift,
- Fig. 3: eine Seitenansicht der erfindungsgemäßen Vorrichtung aus Fig. 2 während eines Spaltvorganges, und
- Fig. 4: eine Seitenansicht der erfindungsgemäßen Vorrichtung aus Fig. 2 und 3 am Ende des Spaltvorganges.

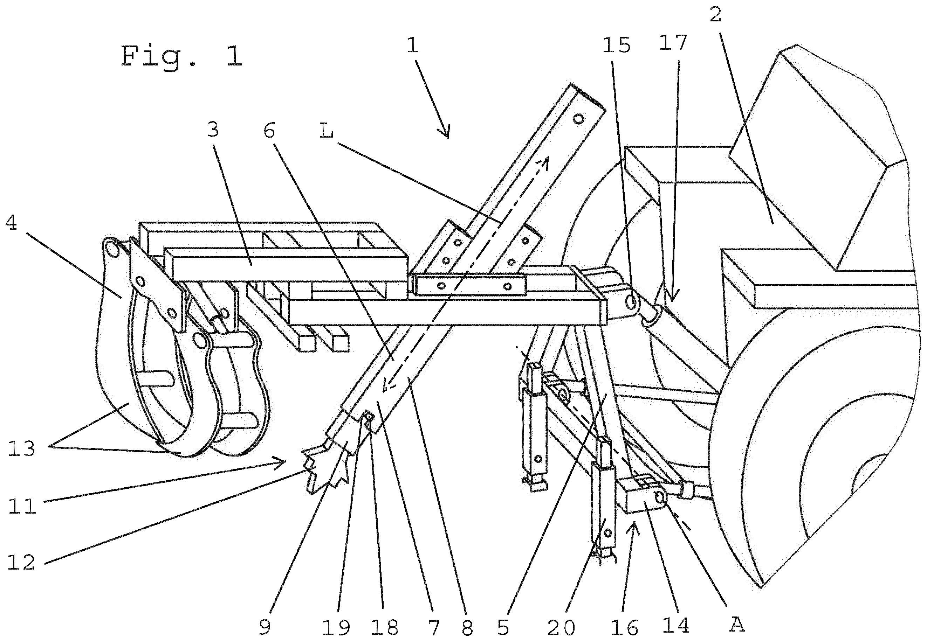

Fig. 1 zeigt eine bevorzugte Ausführungsform der erfindungsgemäßen Vorrichtung 1, die an einem nur abschnittsweise dargestellten Nutzfahrzeug 2 angeordnet bzw. mit diesem verbunden ist. Im vorliegenden Fall ist das Nutzfahrzeug 2 ein Traktor.

Die Vorrichtung 1 weist eine an einem Zangenarm 3 angeordnete Spaltzange 4 auf, die in ein Langholz H, z.B. einen Baumstamm, eingreifen und diesen im Eingriffsbereich lokal spalten kann.

Die Vorrichtung 1 weist weiters eine Verbindungseinrichtung 5 auf, mit der die Vorrichtung 1 am Nutzfahrzeug 2 montiert ist. Der Zangenarm 3 ist bei der dargestellten Ausführungsform der erfindungsgemäßen Vorrichtung 1 im Wesentlichen starr und mit der Verbindungseinrichtung 5 verbunden. Die Spaltzange 4 ist an einem distalen Ende des Zangenarms 3, das einem proximalen Ende des Zangenarms 3 gegenüberliegt, welches mit der Verbindungseinrichtung 5 verbunden ist, angeordnet.

An dem Zangenarm 3 ist ein Niederhalter 6 angeordnet. Der Niederhalter 6 weist eine Längserstreckung L auf, die in einem spitzen Winkel zur Vertikale geneigt ist.

Der Niederhalter 6 weist in der dargestellten Ausführungsform ein längliches Trägerelement 7 auf, das in einem spitzen Winkel an dem Zangenarm 3 angeordnet bzw. befestigt ist. Das Trägerelement 7 besteht im Wesentlichen aus einem Außenträger 8 in dem ein teleskopartig ausfahrbarer Innenträger 9 verschiebbar gelagert ist.

Der Innenträger 9 des Trägerelementes 7 (und somit der Niederhalter 6) weist ein freies, nach unten ragendes Ende 11 auf. An dem freien Ende 11 des Niederhalters 6 ist ein mehrere Zähne bzw. Zacken aufweisendes Angriffselement 12 angeordnet. Die Zähne bzw. Zacken des Angriffselementes 12 sind dafür geeignet, an dem Langholz H anzugreifen bzw. in das Langholz H einzugreifen.

Das freie Ende 11 des Niederhalters 6 ist anhebbar und absenkbar, indem der Innenträger 9 aus dem Außenträger 8 in Richtung der Längserstreckung L des Niederhalters 6 ausgefahren oder in den Außenträger 8 eingefahren wird. Das Ausfahren und Einfahren des Innenträgers 9 erfolgt in der dargestellten Ausführungsform mit Hilfe eines hydraulischen, pneumatischen oder elektrischen Antriebes, der im oder am Außenträger 8 angeordnet ist.

Da die Längserstreckung L des Niederhalters 6 in einem spitzen Winkel zur Vertikale und zum Zangenarm 3 verläuft, sodass das freie Ende 11 des Niederhalters 6 nach unten hin und vom Nutzfahrzeug 2 weg bzw. in Richtung der Spaltzange 4 hin ragt, nähert sich das freie Ende 11 beim Absenken in horizontale Richtung der Spaltzange 4 an.

Die Spaltzange 4 weist wenigstens zwei Klauen 13 auf, die mit Hilfe eines in bzw. an der Spaltzange 4 oder am Zangenarm 3 angeordneten, hydraulischen, pneumatischen oder elektrischen Antriebes aufeinander zu und voneinander weg bewegbar sind. In der dargestellten Ausführungsform sind die Klauen 13 so weit aufeinander zu bewegt, dass das dazwischen angeordnete Langholz H in Fig. 1 in dem Bereich, in dem die Spaltzange 4 angreift bzw. eingreift, lokal gespalten ist.

Die Verbindungseinrichtung 5 ist bei der dargestellten Ausführungsform über Verbindungselemente 14, 15 mit dem Nutzfahrzeug 2 verbunden.

In einem unteren Bereich der Verbindungseinrichtung 5 sind auf gleicher vertikaler Höhe, nebeneinander und voneinander beabstandet, zwei Verbindungselemente 14 für jeweils eine Schwenkverbindung 16 vorgesehen. Die Schwenkverbindungen 16 weisen eine gemeinsame, horizontal verlaufende Schwenkachse A auf, um die die Vorrichtung 1 am Nutzfahrzeug 2 verschwenkbar ist.

Über die Verbindungseinrichtung 5 ist die gesamte erfindungsgemäße Vorrichtung 1 verschwenkbar mit dem Nutzfahrzeug 2 verbunden, sodass der Zangenarm 3 in einer Vertikalebene verschwenkbar ist.

In einem oberen Bereich der Verbindungseinrichtung 5 ist ein weiteres Verbindungselement 15 angeordnet, das ein Anschluss für eine Verschiebungseinrichtung 17 ist. In der dargestellten Ausführungsform ist die Verschiebungseinrichtung 17 ein das Nutzfahrzeug 2 mit der Verbindungseinrichtung 5 verbindender Hubkolbenantrieb, der hydraulisch, pneumatisch oder elektrisch betrieben ist.

Durch Ausfahren der Verschiebungseinrichtung 17 wird der obere Bereich der Verbindungseinrichtung 5 vom Nutzfahrzeug 2 weg bewegt, sodass die Verbindungseinrichtung 5 um die Schwenkachse A verschwenkt und die Spaltzange 4 am Zangenarm 3 abgesenkt wird. Durch Einfahren der Verschiebungseinrichtung 17 schwenkt die Verbindungseinrichtung 5 in die Gegenrichtung, sodass die Spaltzange 4 angehoben wird.

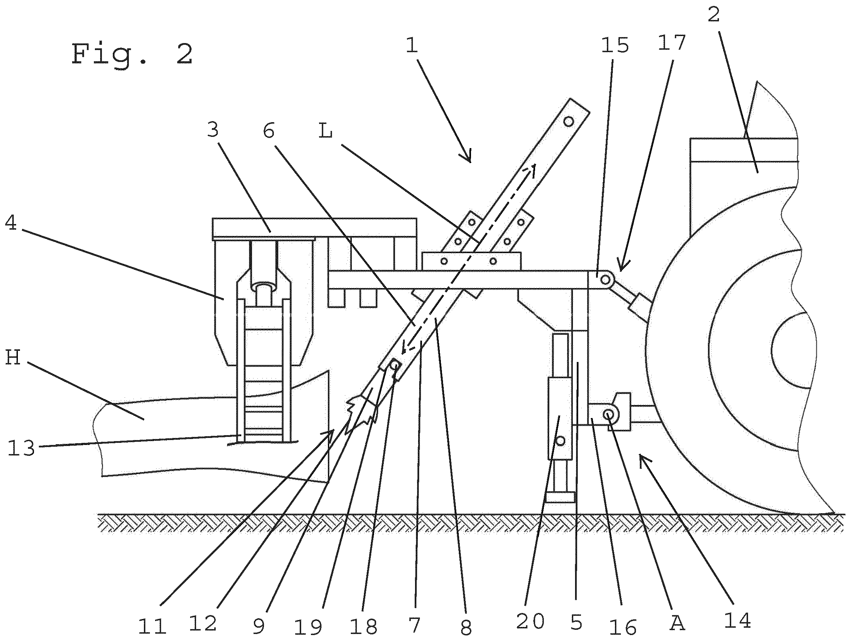

Die Fig. 2 bis 4 zeigen die erfindungsgemäße Vorrichtung in einer Seitenansicht und zu unterschiedlichen Zeitpunkten während des Spaltens des Langholzes H, das im dargestellten Fall ein Baumstamm ist.

In Fig. 2 hat die Spaltzange 4 das Langholz H bereits gepackt und greift in dieses ein. Im Bereich des Eingriffes, d.h. dort wo die Klauen 13 der Spaltzange 4 seitlich in das Langholz H eindringen, ist das Langholz H lokal gespalten.

Vor dem in Fig. 2 dargestellten Zeitpunkt wurde die Spaltzange 4 - wie bereits beschrieben (durch Verschwenken der Verbindungseinrichtung 5) - zum am Boden liegenden Langholz H hin bewegt, um dieses mit den Klauen 13 zu fassen und durch Einfahren der Verschiebungseinrichtung 17 anzuheben.

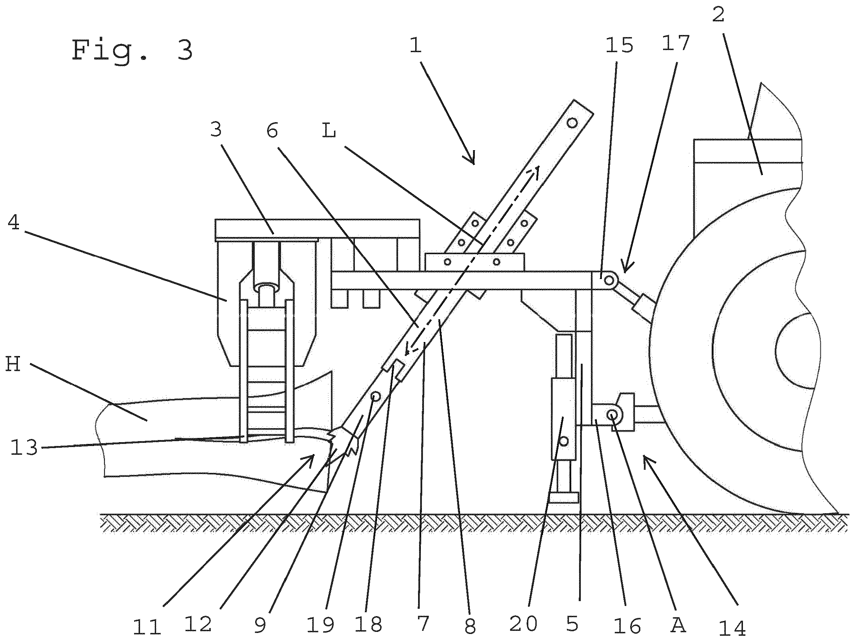

In Fig. 3 ist das in Fig. 2 noch in einem angehobenen Zustand gezeigte freie Ende 11 des Niederhalters 6 abgesenkt und an das Langholz H herangeführt, sodass es an diesem anliegt. Genauer gesagt greift das Angriffselement 12 des freien Endes 11 an einer unterhalb der Klauen 13 angeordneten Hälfte des Langholzes H an bzw. in diese ein.

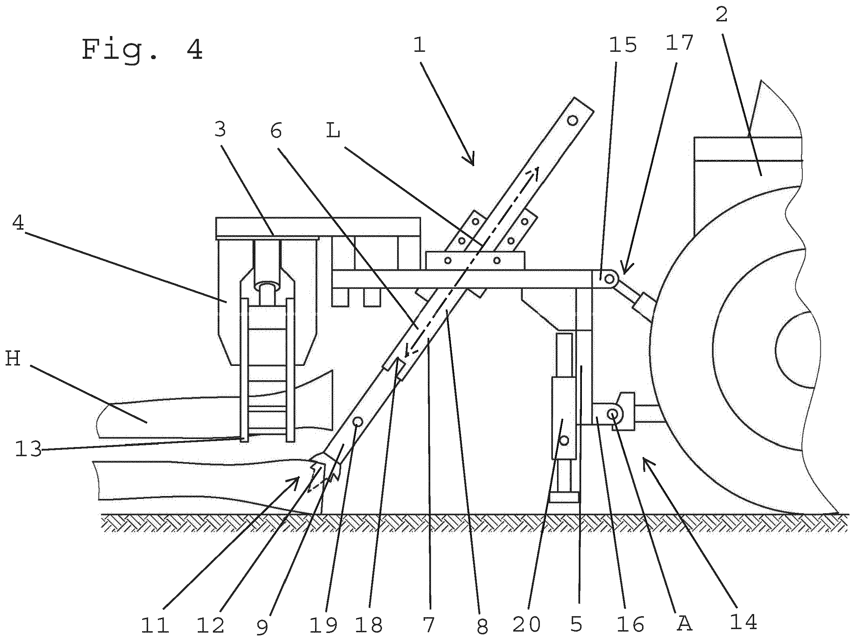

In Fig. 4 ist das freie Ende 11 des Niederhalters 6 noch weiter abgesenkt dargestellt. Durch das Absenken des an das Langholz H angreifenden freien Endes 11 wird die untere Hälfte des Langholzes H nach unten gedrückt, sodass der zuvor noch lokal um die Spaltzange 4 herum begrenzte Spalt weiter aufreißt. Wird das freie Ende 11 weit genug abgesenkt (wobei gleichzeitig auch die Spaltzange 4 durch Verschwenken der Verbindungseinrichtung 5 angehoben werden kann) setzt sich der Spalt durch das gesamte Langholz H fort, sodass dieses schließlich in zwei Teile gespalten wird.

Denkbar sind auch Ausführungsformen, bei denen das Trägerelement 7 des Niederhalters 6 nicht im Wesentlichen starr mit dem Zangenarm 3 verbunden ist, sondern an diesem um eine vertikale Schwenkachse verschwenkbar gelagert ist.

Vom Innenträger 9 des Niederhalters 6 kann, wie in den Fig. 1 bis 4 dargestellt, zu wenigstens einer Seite hin ein Anschlagbolzen 18 weg ragen. Dieser Anschlagbolzen 18 liegt bei einem wie in den Fig. 1 und 2 dargestellten, nicht ausgefahrenen Innenträger 9 in einer am Außenträger 8 ausgebildeten Anschlagkerbe 19 an.

Weiters kann die Verbindungseinrichtung 5 eine Stütze 20 oder, wie in der dargestellten Ausführungsform, mehrere Stützen 20 aufweisen. Diese Stütze/n 20 kann/können während des Spaltens (bzw. bereits davor) abgesenkt werden, sodass die Vorrichtung 1 bzw. das die Vorrichtung 1 tragende Nutzfahrzeug 2 beim Spalten oder Anheben des Langholzes H am Untergrund abgestützt ist.

Der bzw. die nicht im Detail dargestellte/n Antrieb/e für die Spaltzange 4 und/oder den Niederhalter 6 kann/können über nicht näher dargestellte Leitungen (z.B. Steuerleitungen, Stromleitungen, Pneumatikleitungen, Hydraulikleitungen, etc.) mit einem nicht dargestellten, insbesondere an der Vorrichtung 1 oder am Nutzfahrzeug 2 angeordneten, Netzgerät, Steuergerät, Kompressor, usw. verbunden sein.

### Bezugszeichenliste:

- 1: Vorrichtung
- 2: Nutzfahrzeug
- 3: Zangenarm
- 4: Spaltzange
- 5: Verbindungseinrichtung
- 6: Niederhalter
- 7: Trägerelement
- 8: Außenträger
- 9: Innenträger
- 10: ---
- 11: freies Ende
- 12: Angriffselement
- 13: Klauen
- 14: Verbindungselement für Schwenkverbindung
- 15: Verbindungselement für Verschiebungseinrichtung
- 16: Schwenkverbindung
- 17: Verschiebungseinrichtung
- 18: Anschlagbolzen
- 19: Anschlagkerbe
- 20: Stützen

- H: Langholz
- L: Längserstreckung
- A: Schwenkachse

## Patentansprüche

1. Vorrichtung (1) zum Spalten von Langholz (H), die eine Verbindungseinrichtung (5) zum Verbinden der Vorrichtung (1) mit einem Nutzfahrzeug (2), einen an der Verbindungseinrichtung (5) angeordneten Zangenarm (3) und eine am Zangenarm (3), vorzugsweise an dessen distalem Ende, angeordnete Spaltzange (4) mit wenigstens zwei aufeinander zu bewegbaren, mit Schneidkanten bzw. Schneidkeilen versehenen Klauen (13) aufweist, wobei die Spaltzange (4) anhebbar und absenkbar ist, **dadurch gekennzeichnet, dass** die Vorrichtung (1) zusätzlich einen Niederhalter (6) zum Niederhalten jenes Teils des mit der Spaltzange ergriffenen und im Angriffsbereich der Spaltzange lokal gespaltenen Langholzes (H), das unterhalb eines durch die Spaltzange erzeugten lokalen Spaltes liegt, aufweist, der eine Längserstreckung (L) und ein nach unten gerichtetes freies Ende (11), an dem der Niederhalter (6) wenigstens einen Dorn, eine Kralle oder einen Zahn zum Niederhalten von Langholz (H) aufweist und das mit Hilfe eines Antriebes unabhängig von der Spaltzange anhebbar und absenkbar ist, aufweist.

2. Vorrichtung nach Anspruch 1, **dadurch gekennzeichnet, dass** der Zangenarm (3) in einer Vertikalebene verschwenkbar ist, insbesondere indem der Zangenarm (3) an seinem proximalen Ende schwenkbar mit der Verbindungseinrichtung (5) verbunden ist und/oder indem die Verbindungseinrichtung (5) schwenkbar mit dem Nutzfahrzeug (2) verbindbar ist.

3. Vorrichtung nach Anspruch 1 oder 2, **dadurch gekennzeichnet, dass** der Niederhalter (6) an der Verbindungseinrichtung (5) und/oder am Zangenarm (3) angeordnet ist.

4. Vorrichtung nach einem der Ansprüche 1 bis 3, **dadurch gekennzeichnet, dass** der Niederhalter (6) ein in Richtung seiner Längserstreckung (L) verlaufendes, längliches Trägerelement (7) aufweist.

5. Vorrichtung nach einem der Ansprüche 1 bis 4, **dadurch gekennzeichnet, dass** die Längserstreckung (L) des Niederhalters (6) in einem spitzen Winkel zur Vertikale verläuft.

6. Vorrichtung nach Anspruch 5, **dadurch gekennzeichnet, dass** der Niederhalter (6) um eine im Wesentlichen horizontal verlaufende Schwenkachse verschwenkbar ist, sodass der Winkel zur Vertikale veränderbar ist.

7. Vorrichtung nach einem der Ansprüche 1 bis 6, **dadurch gekennzeichnet, dass** das freie Ende (11) des Niederhalters (6) anhebbar und absenkbar ist, indem der Niederhalter (6), vorzugsweise ein längliches Trägerelement (7) des Niederhalters (6), in der Vorrichtung (1) in Richtung der Längserstreckung (L) des Niederhalters (6) verschiebbar gelagert ist.

8. Vorrichtung nach einem der Ansprüche 1 bis 7, **dadurch gekennzeichnet, dass** das freie Ende (11) des Niederhalters (6) anhebbar und absenkbar ist, indem der Niederhalter (6), vorzugsweise ein längliches Trägerelement (7) des Niederhalters (6), in Richtung der Längserstreckung (L) des Niederhalters (6) längenveränderbar ist, insbesondere indem der Niederhalter (6) bzw. ggf. das Trägerelement (7) teleskopartig einfahrbare und ausfahrbare Segmente, wie beispielsweise einen in einem Außenträger (8) ein- und ausfahrbaren Innenträger (9), aufweist.

9. Vorrichtung nach einem der Ansprüche 1 bis 8, **dadurch gekennzeichnet, dass** die Verbindungseinrichtung (5) wenigstens drei Verbindungselemente (14, 15) zum Verbinden mit dem Nutzfahrzeug (2) aufweist, sodass sie an wenigstens drei Stellen mit einem Nutzfahrzeug (2) verbindbar ist.

10. Vorrichtung nach Anspruch 9, **dadurch gekennzeichnet, dass** zwei der Verbindungselemente (14) Anschlüsse für bzw. Bestandteile von Schwenkverbindungen (16) sind, durch die die Verbindungseinrichtung (5) um eine im Wesentlichen horizontal verlaufende Schwenkachse (A) schwenkbar mit dem Nutzfahrzeug (2) verbindbar sind, und dass das dritte Verbindungselement (15) ein Anschluss für bzw. Bestandteil von einer Verschiebungseinrichtung (17), wie einem hydraulischen Hubkolben, ist, durch die die Verbindungseinrichtung (5) zumindest bereichsweise vom Nutzfahrzeug (2) weg und zum Nutzfahrzeug (2) hin bewegt werden kann.

11. Fahrzeug zum Spalten von Langholz (H), wobei das Fahrzeug ein Nutzfahrzeug (2) mit einer damit verbundenen Vorrichtung (1) zum Spalten von Langholz (H) nach einem der Ansprüche 1 bis 10 ist.

## Claims

1. Device (1) for splitting long logs (H), comprising a connecting device (5) for connecting the device (1) to a utility vehicle (2), a grapple arm (3) arranged on the connecting device (5), and a splitting grapple (4) arranged on the grapple arm (3), preferably at its distal end, with at least two claws (13) that can be moved toward each other and are provided with cutting edges or cutting wedges, wherein the splitting grapple (4) can be raised and lowered, **characterized in that** the device (1) additionally has a hold-down device (6) for holding down that part of the long log (H), gripped by the splitting grapple and locally split in the engagement area of the splitting grapple, which lies below a local split produced by the splitting grapple, which has a longitudinal extension (L) and a downwardly directed free end (11) at which the hold-down device (6) has at least one spike, claw, or tooth for holding down the long log (H) and which can be raised and lowered independently of the splitting grapple by means of a drive.

2. Device according to claim 1, **characterized in that** the grapple arm (3) can be pivoted in a vertical plane, in particular by the grapple arm (3) being pivotably connected to the connecting device (5) at its proximal end and/or by the connecting device (5) being pivotably connectable to the utility vehicle (2).

3. Device according to claim 1 or 2, **characterized in that** the hold-down device (6) is arranged on the connecting device (5) and/or on the grapple arm (3).

4. Device according to one of claims 1 to 3, **characterized in that** the hold-down device (6) has an elongated support element (7) extending in the direction of its longitudinal extension (L).

5. Device according to one of claims 1 to 4, **characterized in that** the longitudinal extension (L) of the hold-down device (6) extends at an acute angle to the vertical.

6. Device according to claim 5, **characterized in that** the hold-down device (6) can be pivoted about a substantially horizontal pivot axis so that the angle to the vertical can be varied.

7. Device according to one of claims 1 to 6, **characterized in that** the free end (11) of the hold-down device (6) can be raised and lowered by mounting the hold-down device (6), preferably an elongated support element (7) of the hold-down device (6), in the device (1) so that it can be displaced in the direction of the longitudinal extension (L) of the hold-down device (6).

8. Device according to one of claims 1 to 7, **characterized in that** the free end (11) of the hold-down device (6) can be raised and lowered by adjusting the hold-down device (6), preferably an elongated support element (7) of the hold-down device (6), in length in the direction of the longitudinal extension (L) of the hold-down device (6), in particular by the hold-down device (6) or, if applicable, the support element (7) having telescopically retractable and extendable segments, such as an inner support (9) that can be retracted into and extended from an outer support (8).

9. Device according to one of claims 1 to 8, **characterized in that** the connecting device (5) has at least three connecting elements (14, 15) for connecting to the utility vehicle (2), so that it can be connected to a utility vehicle (2) at at least three points.

10. Device according to claim 9, **characterized in that** two of the connecting elements (14) are connections for or components of swivel connections (16) by means of which the connecting device (5) can be connected to the utility vehicle (2) in a manner that allows it to swivel about a substantially horizontal swivel axis (A), and that the third connecting element (15) is a connection for or component of a displacement device (17), such as a hydraulic piston, by means of which the connecting device (5) can be moved at least partially away from the utility vehicle (2) and toward the utility vehicle (2).

11. Vehicle for splitting long logs (H), wherein the vehicle is a utility vehicle (2) with a device (1) connected thereto for splitting long logs (H) according to one of claims 1 to 10.

## Revendications

1. Dispositif (1) pour fendre du bois long (H), comportant une installation de liaison (5) pour relier le dispositif (1) à un véhicule utilitaire (2), un bras de grappin (3) disposé sur l'installation de liaison (5) et un grappin de fendage (4) disposé sur le bras de grappin (3), de préférence à son extrémité distale, possédant deux griffes (13) mobiles l'une par rapport à l'autre et munies de bords de coupe ou de coins de coupe, dans lequel le grappin de fendage (4) peut être levé et abaissé, **caractérisé en ce que** le dispositif (1) comporte en outre un élément de maintien (6) pour maintenir la partie du bois long (H) saisi avec le grappin de fendage et fendu localement dans la zone de prise du grappin de fendage qui se trouve en dessous d'une fente créée localement par le grappin de fendage, lequel élément de maintien (6) présente une étendue en longueur (L) et une extrémité libre (11) dirigée vers le bas à laquelle il comporte au moins un mandrin, une griffe ou une dent pour maintenir le bois long (H) et peut être levé et abaissé à l'aide d'un entraînement indépendamment du grappin de fendage.

2. Dispositif selon la revendication 1, **caractérisé en ce que** le bras de grappin (3) peut pivoter dans un plan vertical, en particulier par le fait que le bras de grappin (3) est relié à son extrémité proximale, de façon pivotante, avec l'installation de liaison (5) et/ou par le fait que l'installation de liaison (5) peut être reliée de façon pivotante au véhicule utilitaire (2).

3. Dispositif selon la revendication 1 ou 2, **caractérisé en ce que** l'élément de maintien (6) est disposé sur l'installation de liaison (5) et/ou sur le bras de grappin (3).

4. Dispositif selon l'une des revendications 1 à 3, **caractérisé en ce que** l'élément de maintien (6) comporte un élément de support (7) allongé orienté dans la direction de son étendue en longueur (L).

5. Dispositif selon l'une des revendications 1 à 4, **caractérisé en ce que** l'étendue en longueur (L) de l'élément de maintien (6) forme un angle aigu par rapport à la verticale.

6. Dispositif selon la revendication 5, **caractérisé en ce que** l'élément de maintien (6) peut pivoter autour d'un axe de pivotement sensiblement horizontal, de sorte que l'angle par rapport à la verticale est modifiable.

7. Dispositif selon l'une des revendications 1 à 6, **caractérisé en ce que** l'extrémité libre (11) de l'élément de maintien (6) peut être levée et abaissée par le fait que l'élément de maintien (6), de préférence un élément de support allongé (7) de l'élément de maintien (6), est supporté dans le dispositif (1) avec possibilité de translation dans la direction de l'étendue en longueur (L) de l'élément de maintien (6).

8. Dispositif selon l'une des revendications 1 à 7, **caractérisé en ce que** l'extrémité libre (11) de l'élément de maintien (6) peut être levée et abaissée par le fait que l'élément de maintien (6), de préférence un élément de support allongé (7) de l'élément de maintien (6), a une longueur modifiable dans la direction de l'étendue en longueur (L) de l'élément de maintien (6), en particulier par le fait que l'élément de maintien (6), ainsi que l'élément de support (7) le cas échéant, comporte des segments pouvant être rétractés et sortis de façon télescopique, par exemple un support intérieur (9) pouvant être rétracté et sorti dans un support extérieur (8).

9. Dispositif selon l'une des revendications 1 à 8, **caractérisé en ce que** l'installation de liaison (5) comporte au moins trois éléments de liaison (14, 15) pour la liaison au véhicule utilitaire (2), de sorte qu'elle peut être reliée à un véhicule utilitaire (2) en au moins trois points.

10. Dispositif selon la revendication 9, **caractérisé en ce que** deux des éléments de liaison (14) sont des raccords pour ou des composants de liaisons pivotantes (16) par lesquelles l'installation de liaison (5) peut être reliée au véhicule utilitaire (2) de façon pivotante autour d'un axe de pivotement (A) orienté de façon sensiblement horizontale, et **en ce que** le troisième élément de liaison (15) est un raccord pour ou un composant d'une installation de translation (17) telle qu'un piston de levage hydraulique, par laquelle l'installation de liaison (5) peut être au moins en partie éloignée du véhicule utilitaire (2) et approchée du véhicule utilitaire (2).

11. Véhicule pour le fendage de bois long (H), lequel véhicule est un véhicule utilitaire (2) muni d'un dispositif (1) pour fendre du bois long (H) selon l'une des revendications 1 à 10 qui lui est relié.
